# FASCICULE DE BREVET EUROPEEN

(11) **EP 3 089 896 B1**
(45) Date de publication et mention de la délivrance du brevet: **25.04.2018**
(21) Numéro de dépôt: 14827447.5
(22) Date de dépôt: 23.12.2014
(51) Int. Cl.: B60T 13/02, B60T 13/12, B60T 13/58, B60T 13/74, F16D 51/22, F16D 65/22

(54) **ACTIONNEUR AVEC SOUS-ENSEMBLE DE TRANSMISSION A ENGRENAGE, ET FREIN A TAMBOUR ET DISPOSITIF DE FREINAGE AINSI EQUIPES**
BETÄTIGUNGSEINRICHTUNG MIT ZAHNRADGETRIEBE, UND TROMMELBREMSE MIT SO EINEM GETRIEBE
ACTUATOR WITH GEARED TRANSMISSION SUB-ASSEMBLY, AND DRUM BRAKE AND BRAKING DEVICE PROVIDED WITH SAME

(30) Priorité: 30.12.2013 FR 1363704
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy Le Grand (FR); DUPAS, Christophe, F-91120 Palaiseau (FR); PASQUET, Thierry, F-94700 Vincennes (FR); MOLINARO, Alberto, 93160 Noisy Le Grand (FR)
(74) Mandataire: Pontet Allano & Associes
(86) Numéro de dépôt international: PCT/EP2014/079208
(87) Numéro de publication internationale: WO 2015/101565

(56) Documents cités:
- EP-A2- 1 736 388
- DE-A1-102005 048 339
- US-A1- 2010 096 224
- US-A1- 2012 031 716
- US-A1- 2013 087 422

## Description

L'invention se rapporte à un actionneur pour des segments de freinage d'un frein à tambour de véhicule automobile, en particulier à motorisation électrique. Elle concerne également un procédé d'assemblage ainsi qu'un frein à tambour et un dispositif de freinage équipés d'un tel actionneur.

L'actionneur comprend un ensemble d'actionnement linéaire comprenant un système vis-écrou et est apte à écarter des extrémités des segments de freinage. Ce système vis-écrou est entraîné par un engrenage lui-même entraîné par un moteur électrique.

Cet engrenage de transmission est réalisé sous la forme d'un sous-ensemble pré-assemblé, dit cartouche d'engrenage, et comprend des roues dentées à contact extérieur dont les axes sont tous parallèles au déplacement des éléments de l'ensemble d'actionnement linéaire.

### Etat de la technique

Les freins à tambour sont typiquement utilisés dans les véhicules automobiles afin de réaliser trois types de freinage :
- le freinage de service, qui consiste à ralentir et/ou immobiliser le véhicule, typiquement par l'intermédiaire d'une pédale de freinage ;
- le freinage de stationnement, qui permet d'immobiliser le véhicule à l'arrêt, typiquement par l'intermédiaire d'un frein à main ;
- le freinage de secours, qui consiste à ralentir et/ou immobiliser le véhicule en cas de défaillance du freinage de service, et qui est typiquement assuré par le même dispositif que le freinage de stationnement.

Dans la plupart des véhicules équipés de freins à tambour, il est connu que ces trois types de freinage sont réalisés par le même frein à tambour. Spécifiquement et typiquement, la fonction de freinage de stationnement est assurée par un câble reliant une commande de frein à main situé dans l'habitacle, avec un levier pivotant dans le tambour autour d'une extrémité mobile de l'un des segments de freinage pour l'écarter de l'autre segment de freinage via une biellette de réaction.

L'utilisation d'un frein à tambour ainsi actionné à la main ou sous un effort relativement faible fournit un couple de freinage qui peut être insuffisant pour assurer le freinage de stationnement et surtout le freinage de secours.

Un frein à tambour comprend typiquement un tambour, coaxial avec la roue, et consistant en un cylindre creux solidaire de la pièce à freiner. Des segments de freinage équipés de garnitures de freinage peuvent venir frotter sur la surface intérieure du tambour. Pour un freinage, tandis que des premières extrémités des segments s'appuient, tangentiellement à la rotation, sur une plaque de butée solidaire d'un plateau immobilisé en rotation, des deuxièmes extrémités des segments sont écartées l'une de l'autre pour appliquer les garnitures contre la face intérieure du tambour. Dès lors, tout mouvement ou effort en rotation de la roue imprime un couple de rotation aux segments, qu'ils transmettent au plateau au moins en partie par cette plaque de butée. En général, les deux segments sont actionnés en leurs deux extrémités d'un même côté, typiquement par un même actionneur hydraulique à double piston et fixé au plateau, dans un mode de fonctionnement appelé « simplex ».

Dans un autre type de frein à tambour, appelé « duo-servo », une biellette flottante assure la transmission de l'effort d'un segment à l'autre segment. En particulier, un actionneur écarte la première extrémité d'un premier segment lequel s'appuie sur le tambour pendant que sa deuxième extrémité prend appui, par l'intermédiaire de la biellette flottante, sur la deuxième extrémité du deuxième segment, flottante elle aussi. Ainsi, la première extrémité du deuxième segment est la seule à prendre appui sur une plaque de butée. Ce type de frein est nettement plus efficace pour un effort d'actionnement donné, mais présente d'autres inconvénients, notamment car il est plus délicat à ajuster et s'use de façon irrégulière.

Souvent, les freins à tambour de type duo-servo sont utilisés exclusivement comme frein de stationnement et de secours, par exemple en utilisant comme tambour l'intérieur de la cloche centrale du disque d'un frein à disque de service, combinaison appelée « drum-in-hat » et décrite dans le document EP 0 416 760.

Le document US 2013/0087422 A1 divulgue un actionneur linéaire de frein à tambour, qui comporte :
- un actionneur linéaire incluant un système vis-écrou formé par un élément fileté rotatif et un deuxième élément fileté, agencé pour appliquer des segments de freinage contre le tambour en écartant l'une de l'autre les extrémités desdits segments par un entraînement en rotation dudit élément fileté rotatif vis-à-vis dudit deuxième élément fileté ;
- une motorisation rotative ; et
- un sous-ensemble de transmission comprenant des roues dentées à axes parallèles, engrenées entre elles et montées pour transmettre le mouvement rotatif de ladite motorisation audit élément fileté rotatif.

Un autre type de frein consiste à combiner le type simplex pour réaliser le freinage de service et le type duo-servo pour réaliser le freinage de stationnement et de secours. Dans cet esprit, le document FR 2 697 599 propose d'ajouter un actionneur mécanique à proximité de la plaque de butée. Cet actionneur s'appuie d'un côté sur la première extrémité d'un premier segment et de l'autre sur l'extrémité d'un levier supplémentaire agissant sur l'autre segment.

En outre, il est connu d'activer électriquement les segments de freinage d'un frein à tambour. Ainsi, le document US 8 011 482 décrit un mécanisme dans lequel les segments de freinage sont actionnés par une biellette déplacée en translation par un système vis-écrou qui est actionné en rotation par un engrenage lui-même actionné en rotation par un moteur électrique. Le document EP 2 195 219 présente un système de frein de stationnement dans lequel les segments de frein sont actionnés par un élément fileté déplacé en translation par l'intermédiaire d'une roue entraînée par une vis sans fin solidaire en rotation de l'arbre de sortie d'un moteur électrique.

Un but de la présente invention est de proposer un actionneur motorisé des segments de freinage d'un frein à tambour qui permet des opérations de fabrication et/ou d'assemblage et/ou de maintenance simples et flexibles, et procure un fonctionnement fiable, avec de bonnes performances de puissance dans une bonne compacité, et de réduire ou limiter les coûts de production.

### Exposé de l'invention

L'invention propose un actionneur linéaire pour des segments de freinage d'un frein à tambour de véhicule automobile caractérisé en ce qu'il comporte :
- un ensemble d'actionnement linéaire incluant un système vis-écrou formé par un élément fileté rotatif et un deuxième élément fileté, agencé pour appliquer sélectivement des segments de freinage contre le tambour dudit frein en écartant l'une de l'autre des premières extrémités desdits segments par un entraînement en rotation dudit élément fileté rotatif vis-à-vis dudit deuxième élément fileté ;
- une motorisation rotative ;
- un sous-ensemble de transmission comprenant des roues dentées à axes parallèles, engrenées entre elles et montées pour transmettre le mouvement rotatif de ladite motorisation audit élément fileté rotatif.

Contrairement aux solutions de l'art antérieur utilisant un système à vis sans fin, le choix d'utiliser des engrenages à axes parallèles peut nécessiter des pièces plus nombreuses pour obtenir la démultiplication nécessaire. Pourtant, l'invention propose de ne pas utiliser un tel système de vis sans fin.

L'invention procure un bon rendement énergétique de la transmission depuis la motorisation, ce qui permet d'obtenir un effort de serrage plus important ou une vitesse de serrage plus élevée ou d'utiliser une motorisation moins puissante, ou un meilleur compromis entre ces performances.

Selon d'autres caractéristiques avantageuses de l'invention :
- les roues dentées sont à contact extérieur ;
- le sous-ensemble de transmission comprend trois roues dentées ;
- les roues dentées sont à denture hélicoïdale ;
- le rapport de transmission entre une roue menante (41) située en entrée du sous-ensemble de transmission (4) et une roue menée (43) située en sortie dudit sous-ensemble de transmission produit une réduction de vitesse angulaire d'un facteur supérieur à 2, par exemple entre 2,5 et 3,5 et notamment valant 2,9.

Un engrenage composé de trois roues à denture hélicoïdale présente le double avantage de réduire le bruit et les vibrations durant l'engrènement, grâce à la denture hélicoïdale, et d'annuler ou modifier l'effort axial engendré par les hélices durant l'engrènement, grâce au nombre impair des roues. De plus, une réduction de vitesse définie par un rapport entre la vitesse angulaire de la roue menante (ω₁) et celle de la roue menée (ω₂) ω₁/ω₂=2,9 optimise la réduction de vitesse.

Selon encore d'autres caractéristiques avantageuses de l'invention :
- l'élément fileté rotatif est monté solidaire en rotation et coulissant coaxialement avec une roue menée située en sortie du sous-ensemble de transmission ;
- la roue menante, située en entrée du sous-ensemble de transmission, est couplée en rotation par emboîtement avec la motorisation ;
- le sous-ensemble de transmission forme un élément pré-assemblé au sein d'une carcasse qui supporte les roues dentées.

La présence d'un sous-ensemble pré-assemblé au sein de l'actionneur simplifie grandement les étapes d'assemblage et de maintenance et contribue ainsi à réduire les coûts de production et de maintenance de façon systématique. Elle permet aussi d'assurer un positionnement plus précis des roues dentées entre elles, ce qui assure un meilleur rendement énergétique et une moindre usure des dentures.

Selon encore d'autres caractéristiques avantageuses de l'invention :
- l'actionneur linéaire comprend :
   ∘ un premier boîtier, recevant l'ensemble d'actionnement linéaire dans un logement d'actionnement, qui intersecte un logement recevant une roue menée située en sortie du sous-ensemble de transmission,
   ∘ un deuxième boîtier, qui est assemblé avec le premier boîtier de façon à renfermer le sous-ensemble de transmission, et qui est muni d'un logement recevant une roue menante située en entrée du sous-ensemble de transmission ;
- la carcasse comprend deux plaques parallèles maintenues entre elles par des pièces de liaison formant entretoises, et entre lesquelles sont maintenues les roues dentées ;
- l'une au moins des pièces de liaison est formée par un arbre de l'une des roues dentées du sous-ensemble de transmission ;
- au moins une paroi de logement de l'un au moins des premier et deuxième boîtiers comprend une ou plusieurs rainures agencées pour former un guidage en translation d'au moins une tête d'entretoise ou d'arbre de roue dépassant de la carcasse lors d'un mouvement d'insertion du sous-ensemble de transmission au sein du logement ;
- la carcasse du sous-ensemble de transmission comprend une ou plusieurs saillies dépassant vers l'extérieur et dimensionnées pour prendre appui sur une paroi de logement de l'un au moins des premier et second boîtiers ;
- le sous-ensemble de transmission s'étend à travers une ouverture d'un plateau support sur lequel l'actionneur est monté solidaire, et la motorisation et le système vis-écrou ont des axes sensiblement parallèles et sont disposés d'un côté opposé l'un de l'autre par rapport au plateau support ;
- l'un des premier et deuxième boîtiers est engagé de façon sensiblement étanche dans une ouverture d'un plateau support.

Un autre aspect de l'invention présente d'autres caractéristiques avantageuses selon lesquelles l'invention peut consister en un frein à tambour dans lequel les deux segments sont montés sur un plateau de façon à pouvoir s'écarter l'un de l'autre pour venir en appui sur la piste de frottement portée par l'intérieur d'un tambour mobile en rotation par rapport au plateau, l'actionneur linéaire étant agencé pour écarter les deux segments par leurs deux premières extrémités en vis-à-vis l'une de l'autre.

Dans un tel frein, selon une particularité, les deux segments sont articulés à une biellette mobile par rapport au plateau et qui les relie entre eux au voisinage de leurs deuxièmes extrémités, opposées aux premières extrémités, la biellette étant apte à transmettre de l'un des segments à l'autre des segments un effort qui pousse cet autre segment en appui contre un élément d'ancrage fixe par rapport au plateau.

Selon une autre particularité, le frein comprend en outre un deuxième actionneur assurant une deuxième fonction de freinage, notamment de service, ce deuxième actionneur étant agencé pour écarter l'une de l'autre les deuxièmes extrémités des deux segments tandis que les premières extrémités viennent en butée par rapport au plateau.

Enfin, selon un autre aspect, l'invention consiste en un dispositif de freinage pour véhicule ou sous-ensemble de véhicule, notamment routier, comprenant un disque de frein interagissant avec des plaquettes de frein pour réaliser une deuxième fonction de freinage, notamment de frein de service, ce dispositif comprenant un frein agencé pour assurer une première fonction de freinage, notamment de frein de stationnement et/ou de secours, dans lequel le tambour est solidaire de, et coaxial avec, le disque de frein.

Selon un autre aspect, l'invention propose aussi un procédé d'assemblage du dispositif dans lequel :
- est comprise au moins une étape d'assemblage du sous-ensemble de transmission comprenant une pluralité de roues dentées engrenées entre elles et maintenues au sein de la carcasse, de façon à former le sous-ensemble de transmission ; et/ou
- est comprise en outre une étape d'insertion du sous-ensemble de transmission dans un premier boîtier, ce premier boîtier étant ensuite assemblé avec un second boîtier de façon à renfermer le sous-ensemble de transmission, l'un de ces boîtiers étant ensuite fixé sur le plateau support de façon à serrer entre le plateau et l'un des boîtiers une ou plusieurs pattes de fixation dépassant de l'autre des boîtiers ; et/ou
- le sous-ensemble de transmission est inséré dans le premier boîtier selon un mouvement contenu dans un plan transversal aux axes des roues dentées ; et/ou
- après l'insertion dans le premier boîtier, une partie au moins du système vis-écrou est glissé axialement dans un orifice axial de la roue dentée menée de sortie de l'engrenage de transmission pour coopérer avec une forme dudit orifice axial de façon à être entraînée en rotation par ladite roue dentée menée.

L'invention permet en particulier une facilité et une souplesse d'adaptation aux besoins et contraintes d'un concepteur de véhicule ou de sous-ensemble de véhicule ; par exemple pour l'adaptation à des véhicules ou des sous-ensembles de véhicule existants, ou en cours de conception pour l'intégrer dans des sous-ensembles de véhicule. En particulier, l'invention est compatible avec les évolutions techniques des modes de commande des organes automobiles, notamment dans le cas du frein de stationnement à commande électrique. Elle permet aussi de mettre en oeuvre plusieurs niveaux de performances de motorisation avec un même modèle d'actionneur.

Des modes de réalisation variés sont prévus, intégrant selon l'ensemble de leurs combinaisons possibles les différentes caractéristiques optionnelles exposées ici.

### Liste des figures

D'autres particularités et avantages de l'invention ressortiront de la description détaillée d'un mode de réalisation nullement limitatif et des dessins annexés sur lesquels :
- la FIGURE 1 est une vue en perspective d'un frein à tambour « bi-mode » dans un exemple de réalisation de l'invention ;
- la FIGURE 2 représente schématiquement, en vue de face, le fonctionnement du frein de la FIGURE 1 lors du serrage, véhicule immobile, du frein de stationnement ;
- la FIGURE 3 est une vue éclatée partielle avant montage de l'actionneur de frein de stationnement du mécanisme de la FIGURE 1 et du plateau support du mécanisme de la FIGURE 1 ;
- la FIGURE 4 est une vue en perspective et écorché partiel de l'actionneur de frein de stationnement ou de secours du mécanisme de la FIGURE 1, dans un exemple de réalisation à motorisation électrique ;
- les FIGURES 5 et 6 sont des vues éclatées de l'actionneur de frein de stationnement ou de secours de la FIGURE 4 ;
- la FIGURE 7 est une vue en perspective transparente de la transmission mécanique de l'actionneur de frein de stationnement ou de secours de la FIGURE 4 dans un mode de réalisation actuellement préféré ;
- la FIGURE 8 est une vue en perspective d'une variante de la transmission mécanique de l'actionneur de frein de stationnement ou de secours de la FIGURE 4.

### Description d'un exemple de mode de réalisation

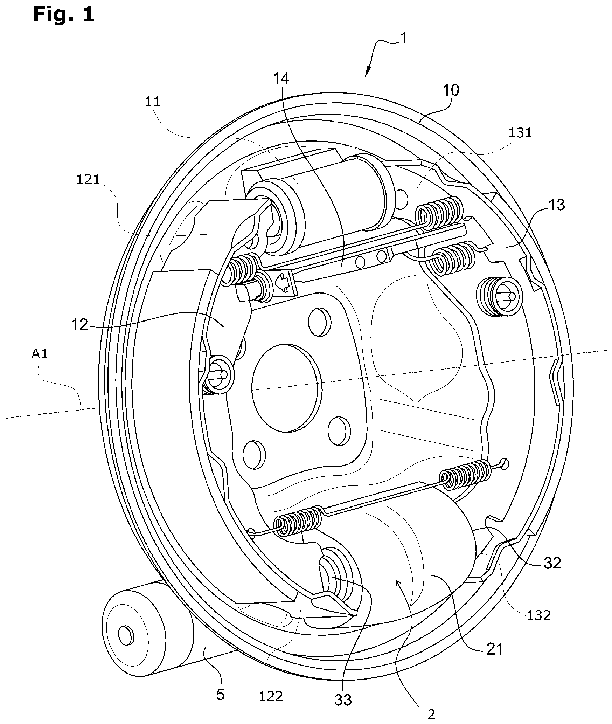

La FIGURE 1 représente un frein à tambour « bi-mode » dans un exemple de réalisation de l'invention. Ce mode de réalisation peut être mis en oeuvre avec différents types d'actionneurs pour le mode de frein de service, et différents types de motorisation pour l'actionneur de frein de stationnement ou de secours.

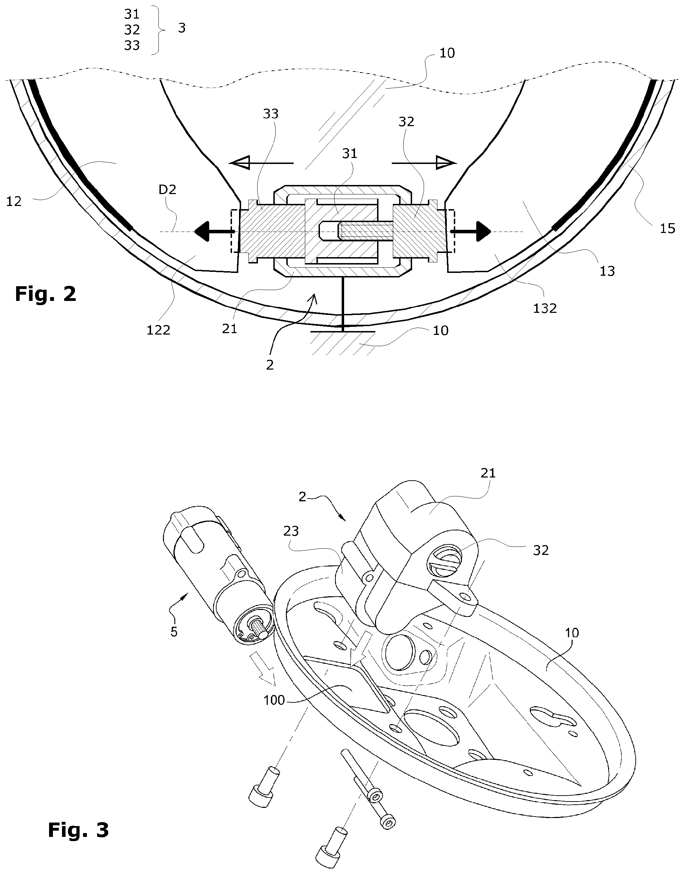

En mode de frein de stationnement ou de secours, comme illustré en FIGURE 2, l'actionneur linéaire 2 comprend un ensemble d'actionnement linéaire 3 qui appuie sur des premières extrémités 122, 132 des segments 12, 13 pour les écarter l'une de l'autre, et mettre ainsi les segments en appui contre la piste de frottement du tambour 15 du frein. Depuis la position de repos, ou depuis la position de freinage de service, l'actionneur linéaire 2 amène ainsi le mécanisme en position de freinage de stationnement, et le retour à la position de repos est réalisé par exemple par des ressorts de rappel reliant entre eux les deux segments.

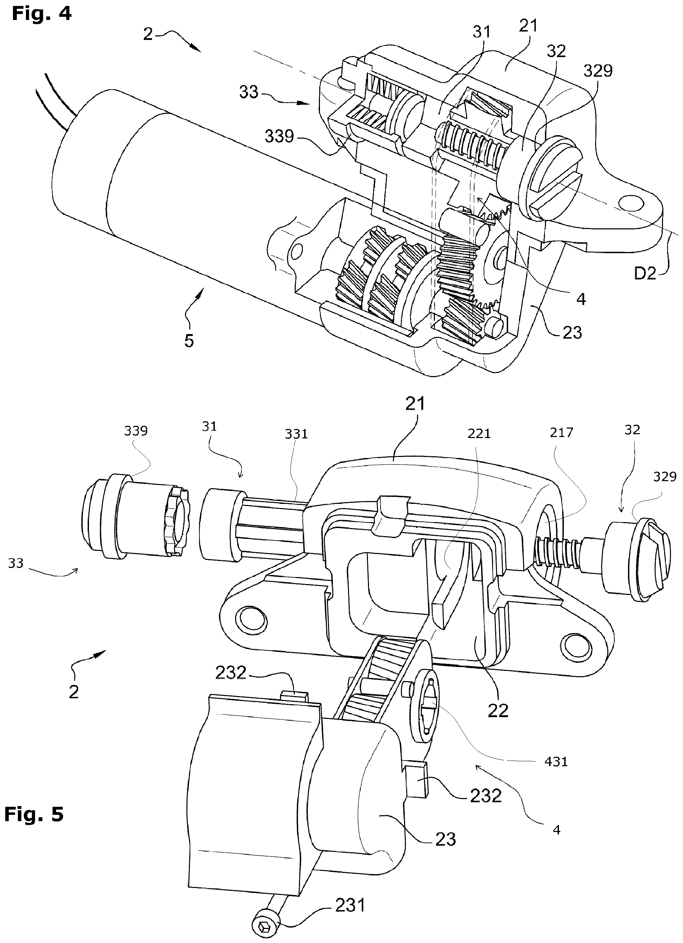

Les FIGURES 4, 5 et 6 représentent un actionneur de frein de stationnement ou de secours. Dans cet exemple, l'ensemble d'actionnement linéaire 3, comprenant un système vis-écrou, inclut un premier piston 33 et un deuxième piston 32 qui sont déplacés l'un par rapport à l'autre en un mouvement linéaire, selon une direction D2 tangentielle à l'axe de rotation A1. Comme indiqué dans la FIGURE 2, ce déplacement appuie ces deux pistons respectivement sur les deux premières extrémités 122, 132 d'un premier segment 12 et d'un deuxième segment 13. Dans le présent exemple, le système vis-écrou est actionné par un sous-ensemble de transmission 4 lui-même actionné par une motorisation rotative 5.

Le sous-ensemble de transmission 4 actionne en rotation un élément fileté rotatif 31 du système vis-écrou qui est en prise de filetage avec un élément fileté non rotatif qui est ici constitué par le deuxième piston 32. En outre, l'élément fileté 31 est en appui axial contre le premier piston 33, avec liberté de rotation entre eux.

Plus particulièrement, l'un des éléments de l'ensemble d'actionnement linéaire 3 est un élément 33 déformable élastiquement selon l'axe du mouvement d'actionnement, dit élément élastique, aussi appelé « spring package » en anglais. Cet élément élastique permet d'emmagasiner de l'énergie mécanique lors de l'activation de l'actionneur linéaire 2, pour maintenir l'effort de freinage ou absorber les déformations au cours des différentes circonstances pouvant survenir pendant la durée de l'immobilisation du véhicule. L'ensemble d'actionnement linéaire 3 comprend donc le système vis-écrou 31, 32 monté mécaniquement en série avec l'élément 33.

Dans le mode de réalisation des FIGURES 1 et 3, l'actionneur de frein de stationnement ou de secours est monté et fixé par son boîtier sur le plateau 10 d'un frein à tambour de sorte que ce boîtier et le sous-ensemble de transmission qu'il contient soient engagés de façon étanche dans une ouverture 100 du plateau et de sorte que le système vis-écrou et la motorisation rotative 5 aient des axes sensiblement parallèles et soient disposés d'un côté opposé l'un de l'autre par rapport au plateau. Un premier boîtier 21 entourant l'ensemble d'actionnement linéaire 3 est ici engagé de façon sensiblement étanche dans l'ouverture 100 du plateau 10. Ce premier boîtier remplit aussi le rôle de butée transmettant le couple de freinage ou de maintien entre les segments 12, 13 et le plateau. Ce premier boîtier est réalisé par exemple en métal moulé et usiné, par exemple en fonte d'aluminium.

Le mode de réalisation qui vient d'être décrit n'est nullement limitatif. En particulier, les éléments propres à l'actionneur linéaire 2 du frein de stationnement ou de secours peuvent être intégrés tels quels au sein de tout type de frein à tambour, notamment d'un frein à tambour mono-mode de type duo-servo utilisé seul, ou encore au sein d'un frein à disque de type « drum-in-hat ».

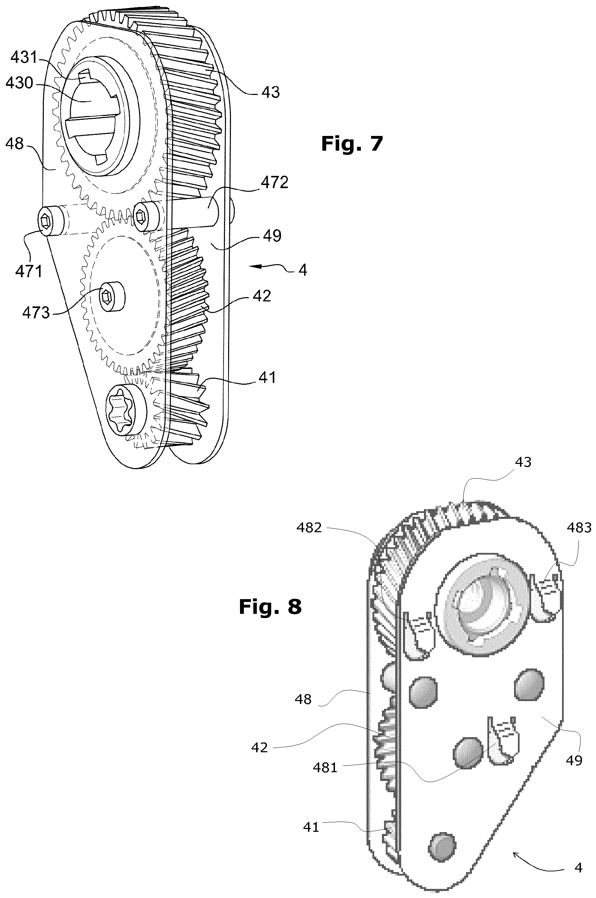

La FIGURE 7 représente, dans le mode de réalisation ici présenté, un sous-ensemble de transmission 4 pré-assemblé, dit cartouche d'engrenage, comprenant une carcasse qui supporte les roues 41, 42, 43, à denture hélicoïdale et à contact extérieur, et qui les maintient dans leur position de fonctionnement, indépendamment de leur environnement extérieur.

La présence d'un sous-ensemble pré-assemblé au sein du dispositif simplifie grandement les étapes d'assemblage et de maintenance et contribue ainsi à réduire les coûts de production de façon systématique. En outre, elle permet de garantir plus facilement et plus précisément une valeur optimale pour leur positionnement relatif, en particulier les entraxes entre roues dentées, ce qui participe grandement à l'obtention d'un rendement de transmission optimal.

Dans le présent exemple, la carcasse de la cartouche d'engrenage comprend deux plaques 48, 49 parallèles et identiques, par exemple métalliques, maintenues entre elles par des pièces de liaison 471, 472, 473 formant entretoises. Celles-ci sont vissées, rivetées ou emmanchées dans les plaques.

Les roues dentées sont maintenues entre les plaques et leur arbres sont positionnés dans des ouvertures ménagées dans les plaques et pouvant servir de paliers. L'arbre de certaines roues dentées, en particulier la ou les roues intermédiaires, ici l'arbre 473 de la roue intermédiaire 42, fait aussi office d'entretoise.

Dans cet exemple, la roue menée 43 du sous-ensemble de transmission 4 entraîne l'écrou 31 du système vis-écrou par un alésage axial 430 portant une forme intérieure 431, ici à cannelures, entourant l'écrou 31 et coopérant avec sa forme extérieure 312. La forme intérieure 431 de la roue menée 43 et la forme extérieure 312 de l'écrou 31 forment ensemble une liaison glissière libre en translation, et leurs géométries respectives sont déterminées pour autoriser un coulissement axial, selon la direction d'actionnement D2, d'une longueur suffisante pour permettre au système vis-écrou de coulisser complètement jusqu'à venir en butée d'un côté 329 ou de l'autre 339 selon le sens du couple de freinage ou de maintien à transmettre.

Le sous-ensemble de transmission 4 est entraîné par une roue menante 41, elle-même entraînée par un motoréducteur 5 assemblé et fixé sur un second boîtier 23 de l'actionneur linéaire 2.

Dans un exemple de mise en oeuvre de ce mode de réalisation, les dentures et dimensions de la cartouche d'engrenage ont été déterminées pour produire une réduction de vitesse, défini par un rapport entre la vitesse angulaire de la roue menante 41 et celle de la roue menée 43, d'une valeur supérieure à 2, et par exemple de ω_{entrée}/ωₛₒᵣₜᵢₑ=2,9, pour un rendement compris entre 0,89 et 0,94.

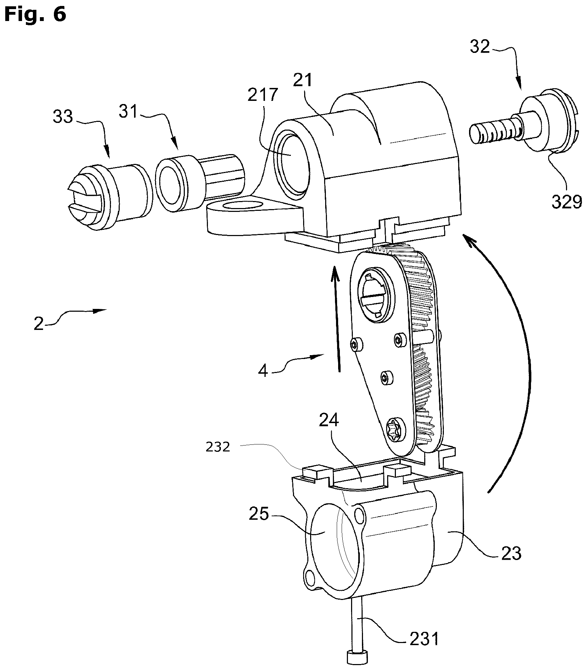

Comme indiqué en FIGURES 5 et 6, le premier boîtier 21 de l'actionneur linéaire 2 est muni d'un logement de transmission 22 s'ouvrant du côté du plateau 10, et reçoit une partie du sous-ensemble de transmission 4 incluant la roue menée 43. Ce logement 22 intersecte le logement 217 formé par un alésage traversant le premier boîtier et recevant l'ensemble d'actionnement linéaire 3.

Le second boîtier 23 de l'actionneur linéaire 2 est assemblé avec le premier boîtier 21 de façon à renfermer de façon étanche le sous-ensemble de transmission 4 dans son propre logement de transmission 24, lequel reçoit ainsi la roue menante 41 de l'engrenage.

Le boîtier secondaire 23 présente des pattes 232 qui traversent l'ouverture 100 du plateau 10 et sont coudées vers l'extérieur pour s'étendre entre le boîtier principal 21 et le plateau et y être serrées fortement lorsque le boîtier 21 est fixé sur le plateau. L'assemblage préalable des deux boîtiers 21, 23, avant la fixation du premier boîtier 21 sur le plateau 10, ne nécessite ainsi que des moyens de fixation très simples, par exemple un simple encliquetage ou une unique vis 231 comme illustré en FIGURE 6.

Les parois des logements 22 et 24 présentent des rainures positionnées pour former un guidage en translation de la cartouche d'engrenage lors de son insertion, par exemple en guidant les têtes d'entretoise et d'arbres des roues qui dépassent vers l'extérieur des plaques parallèles 48, 49. Une fois la cartouche 4 en place dans le boîtier principal 21, sa roue menée 43 est en place dans le logement de l'ensemble d'actionnement linéaire 3, dont les éléments 31, 32, 33 peuvent alors être insérés en place à travers l'alésage de la roue menée 43.

Le deuxième boîtier 23 est aussi muni d'un logement 25 qui reçoit l'arbre de sortie du motoréducteur 5, et sur lequel son boîtier vient s'assembler de façon étanche et non rotative. Une fois le sous-ensemble de transmission 4 en place dans le logement 24 du boîtier secondaire, sa roue d'entrée 41 est en place dans ce logement 25 du motoréducteur dont l'arbre de sortie peut alors y être inséré.

Dans une variante représentée en FIGURE 8, le guidage du sous-ensemble de transmission 4 lors de son insertion dans le premier boîtier 21 ainsi que son maintien en position latérale dans les logements des boîtiers 21, 23 sont assurés par trois saillies élastiques 481, 482, 483 dépassant vers l'extérieur sur l'un au moins des grands côtés de la carcasse 49 du sous-ensemble de transmission.

### Nomenclature

1 frein à tambour
10 plateau support
100 ouverture de plateau
11 deuxième actionneur - frein de service
12, 13 segments de freinage
121, 131 deuxièmes extrémités des segments de freinage
122, 132 premières extrémités des segments de freinage
15 tambour de roue
2 actionneur linéaire - frein de stationnement ou de secours
21 premier boîtier d'actionneur linéaire
217 logement recevant l'ensemble d'actionnement linéaire
22 logement recevant le sous-ensemble de transmission
23 deuxième boîtier d'actionneur linéaire
231 vis de fixation du deuxième boîtier sur le premier boîtier
232 pattes de fixation du deuxième boîtier
24 logement de la cartouche dans le deuxième boîtier
25 logement du motoréducteur dans le deuxième boîtier
3 ensemble d'actionnement linéaire
31 écrou du système vis-écrou
312 cannelures externes de l'écrou
32 vis du système vis-écrou
329 épaulement d'appui - transmission du couple de freinage
33 piston élastique linéaire - « spring package »
339 épaulement d'appui du piston élastique - transmission du couple de freinage
4 sous-ensemble de transmission - cartouche d'engrenage
41 1° roue dentée - roue d'entrée
42 2° roue dentée - roue intermédiaire
43 3° roue dentée - roue de sortie
430 alésage axial de de sortie
431 cannelures intérieures de roue de sortie
471, 472 entretoises
473 arbre de 2° roue dentée - faisant entretoise
48, 49 plaques de maintien
481, 482, 483 pattes de maintien élastiques
5 motorisation rotative - motoréducteur

## Revendications

1. Actionneur linéaire (2) de frein à tambour (1) de véhicule, notamment automobile, **caractérisé en ce qu'**il comporte :
- un ensemble d'actionnement linéaire (3) incluant un système vis-écrou formé par un élément fileté rotatif (31) et un deuxième élément fileté (32), agencé pour appliquer sélectivement des segments de freinage (12, 13) contre le tambour dudit frein en écartant l'une de l'autre des premières extrémités (122, 132) desdits segments par un entraînement en rotation dudit élément fileté rotatif vis-à-vis dudit deuxième élément fileté ;
- une motorisation rotative (5) ;
- un sous-ensemble de transmission (4) comprenant des roues dentées (41, 42, 43) à axes parallèles, engrenées entre elles et montées pour transmettre le mouvement rotatif de ladite motorisation audit élément fileté rotatif,
et **en ce que** l'élément fileté rotatif (31) est monté solidaire en rotation et coulissant coaxialement avec une roue menée (43) située en sortie du sous-ensemble de transmission (4).

2. Actionneur linéaire selon la revendication précédente, **caractérisé en ce que** les roues dentées (41, 42, 43) sont à contact extérieur.

3. Actionneur linéaire selon l'une quelconque des revendications précédentes, **caractérisé en ce que** le rapport de transmission entre une roue menante (41) située en entrée du sous-ensemble de transmission (4) et une roue menée (43) située en sortie dudit sous-ensemble de transmission produit une réduction de vitesse angulaire d'un facteur supérieur à 2, par exemple entre 2,5 et 3,5 et notamment valant 2,9.

4. Actionneur linéaire selon l'une quelconque des revendications précédentes, **caractérisé en ce qu'**une roue menante (41), située en entrée du sous-ensemble de transmission (4), est couplée en rotation par emboîtement avec la motorisation (5).

5. Actionneur linéaire selon l'une quelconque des revendications précédentes, **caractérisé en ce que** le sous-ensemble de transmission (4) forme un élément pré-assemblé au sein d'une carcasse (48, 49) qui supporte les roues dentées (41, 42, 43),
et **en ce que** la carcasse comprend deux plaques (48, 49) parallèles maintenues entre elles par des pièces de liaison formant entretoises (471, 472, 473), et entre lesquelles sont maintenues les roues dentées (41, 42, 43).

6. Actionneur linéaire selon la revendication précédente, **caractérisé en ce qu'**il comprend :
- un premier boîtier (21), recevant l'ensemble d'actionnement linéaire (3) dans un logement d'actionnement (217), qui intersecte un logement (22) recevant une roue menée située en sortie du sous-ensemble de transmission (4) ;
- un deuxième boîtier (23), qui est assemblé avec ledit premier boîtier de façon à renfermer ledit sous-ensemble de transmission, et qui est muni d'un logement (24) recevant une roue menante (41) située en entrée dudit sous-ensemble de transmission (4).

7. Actionneur linéaire selon la revendication 6, **caractérisé en ce qu'**au moins une paroi de logement (22, 24) de l'un au moins des premier (21) et deuxième (23) boîtiers comprend une ou plusieurs rainures (221) agencées pour former un guidage en translation d'au moins une tête d'entretoise (471, 472) ou d'arbre (473) de roue (42) dépassant de la carcasse (48, 49) lors d'un mouvement d'insertion du sous-ensemble de transmission (4) au sein dudit logement.

8. Actionneur linéaire selon la revendication 6 ou 7, **caractérisé en ce que** la carcasse (48, 49) du sous-ensemble de transmission (4) comprend une ou plusieurs saillies (481) dépassant vers l'extérieur et dimensionnées pour prendre appui sur une paroi de logement (22, 24) de l'un au moins des premier (21) et second (23) boîtiers.

9. Actionneur linéaire selon l'une quelconque des revendications 5 à 8, **caractérisé en ce que** le sous-ensemble de transmission (4) s'étend à travers une ouverture (100) d'un plateau support (10) sur l'actionneur (2) est monté solidaire, et **en ce que** la motorisation (5) et le système vis-écrou ont des axes sensiblement parallèles et sont disposés d'un côté opposé l'un de l'autre par rapport audit plateau support.

10. Actionneur linéaire selon l'une quelconque des revendications 6 à 8, **caractérisé en ce que** l'un des premier et deuxième boîtiers (21, 23) est engagé de façon sensiblement étanche dans une ouverture (100) d'un plateau support (10).

11. Frein à tambour (1) comprenant deux segments (12, 13) montés sur un plateau (10) de façon à pouvoir s'écarter l'un de l'autre pour venir en appui sur une piste de frottement portée par l'intérieur d'un tambour mobile en rotation par rapport audit plateau, **caractérisé en ce qu'**il comprend un actionneur linéaire (2) selon l'une quelconque des revendications précédentes agencé pour écarter l'une de l'autre deux premières extrémités (122, 132) desdits segments qui sont en vis-à-vis l'une de l'autre,
et **en ce que** les deux segments (12, 13) sont articulés à une biellette (14) mobile par rapport au plateau et qui les relie entre eux au voisinage de leurs deuxièmes extrémités (121, 131), opposées aux premières extrémités, ladite biellette étant apte à transmettre de l'un (12) desdits segments à l'autre (13) desdits segments un effort qui pousse ledit autre segment (13) en appui contre un élément d'ancrage (21) fixe par rapport au plateau (10).

12. Frein selon la revendication 11, **caractérisé en ce qu'**il comprend en outre un deuxième actionneur assurant une deuxième fonction de freinage, notamment de service (11), ledit deuxième actionneur étant agencé pour écarter l'une de l'autre les deuxièmes extrémités (121, 131) des deux segments (12, 13) tandis que les premières extrémités (122, 132) viennent en butée par rapport au plateau (10).

13. Dispositif de freinage pour véhicule ou sous-ensemble de véhicule, notamment routier, comprenant un disque de frein interagissant avec des plaquettes de frein pour réaliser une deuxième fonction de freinage, notamment de frein de service, **caractérisé en ce qu'**il comprend un frein selon la revendication 11, agencé pour assurer une première fonction de freinage, notamment de frein de stationnement et/ou de secours, et **en ce que** son tambour est solidaire de, et coaxial avec, ledit disque de frein.

14. Procédé d'assemblage d'un actionneur linéaire (2) selon l'une quelconque des revendications 1 à 10, **caractérisé en ce qu'**il comprend au moins une étape d'assemblage d'un sous-ensemble de transmission (4) comprenant une pluralité de roues dentées (42, 42, 43) engrenées entre elles et maintenues au sein d'une carcasse (48, 49), de façon à former une cartouche d'engrenage,
et **en ce qu'**il comprend en outre une étape d'insertion du sous-ensemble de transmission (4) dans un premier boîtier (21), ledit premier boîtier étant ensuite assemblé avec un deuxième boîtier (23) de façon à renfermer ledit sous-ensemble de transmission, l'un (21) desdits boîtiers étant ensuite fixé sur le plateau support (10) de façon à serrer entre ledit plateau et l'un (21) desdits boîtiers une ou plusieurs pattes de fixation (232) dépassant de l'autre (23) desdits boîtiers.

15. Procédé selon la revendication précédente, **caractérisé en ce que**, après l'insertion du sous-ensemble de transmission (4) dans le premier boîtier (21), une partie au moins de l'ensemble d'actionnement linéaire (3) est inséré axialement dans un orifice central (430) de la roue dentée menée (43) dudit sous-ensemble de transmission.

## Patentansprüche

1. Linearaktor (2) einer Trommelbremse (1) eines Fahrzeugs, insbesondere Kraftfahrzeugs, **dadurch gekennzeichnet, dass** er umfasst:
- eine Linearbetätigungsanordnung (3), enthaltend ein durch ein rotierendes Gewindeelement (31) und ein zweites Gewindeelement (32) gebildetes Schraube-Mutter-System, welche dazu eingerichtet ist, Bremsbacken (12, 13) an die Trommel der Bremse dadurch selektiv anzulegen, dass erste Enden (122, 132) der Backen durch einen Drehantrieb des rotierenden Gewindeelements gegenüber dem zweiten Gewindeelement voneinander entfernt werden;
- einen Drehantrieb (5);
- eine Übertragungsuntereinheit (4), die Zahnräder (41, 42, 43) mit parallelen Achsen umfasst, welche untereinander in Eingriff und angebracht sind, um die Drehbewegung des Antriebs auf das rotierende Gewindeelement zu übertragen,
und dass das rotierende Gewindeelement (31) mit einem getriebenen Rad (43), welches am Ausgang der Übertragungsuntereinheit (4) angeordnet ist, drehfest angebracht und koaxial verschieblich ist.

2. Linearaktor nach dem vorhergehenden Anspruch, **dadurch gekennzeichnet, dass** die Zahnräder (41, 42, 43) mit Außenkontakt sind.

3. Linearaktor nach einem der vorhergehenden Ansprüche, **dadurch gekennzeichnet, dass** das Übersetzungsverhältnis zwischen einem treibenden Rad (41), das am Eingang der Übertragungsuntereinheit (4) angeordnet ist, und einem getriebenen Rad (43), das am Ausgang der Übertragungsuntereinheit gelegen ist, eine Winkelgeschwindigkeitsverringerung um einen Faktor von mehr als 2, beispielsweise zwischen 2,5 und 3,5 und insbesondere gleich 2,9 erzeugt.

4. Linearaktor nach einem der vorhergehenden Ansprüche, **dadurch gekennzeichnet, dass** ein treibendes Rad (41), das am Eingang der Übertragungsuntereinheit (4) gelegen ist, mit dem Antrieb (5) durch Einfügen drehgekoppelt ist.

5. Linearaktor nach einem der vorhergehenden Ansprüche, **dadurch gekennzeichnet, dass** die Übertragungsuntereinheit (4) ein innerhalb eines Rahmens (48, 49), der die Zahnräder (41, 42 , 43) trägt, vormontiertes Element bildet,
und dass der Rahmen zwei parallele Platten (48, 49) umfasst, die durch Stege bildende Verbindungsstücke (471, 472, 473) untereinander gehalten sind und zwischen denen die Zahnräder (41, 42, 43) gehalten sind.

6. Linearaktor nach dem vorhergehenden Anspruch, **dadurch gekennzeichnet, dass** er umfasst:
- ein erstes Gehäuse (21), das die Linearbetätigungsanordnung (3) in einer Betätigungsaufnahme (217) aufnimmt, welche eine Aufnahme (22) schneidet, die ein am Ausgang der Übertragungsuntereinheit (4) gelegenes getriebenes Rad aufnimmt;
- ein zweites Gehäuse (23), das mit dem ersten Gehäuse verbunden ist, um die Übertragungsuntereinheit einzuschließen, und das mit einer Aufnahme (24) versehen ist, die ein am Eingang der Übertragungsuntereinheit (4) gelegenes treibendes Rad (41) aufnimmt.

7. Linearaktor nach Anspruch 6, **dadurch gekennzeichnet, dass** wenigstens eine Aufnahmewand (22, 24) von wenigstens einem der ersten (21) und zweiten (23) Gehäuse eine oder mehrere Nuten (221) umfasst, die dazu eingerichtet sind, eine Verschiebeführung wenigstens eines Kopfes eines Stegs (471, 472) oder einer Welle (473) eines Rades (42), der bei einer Bewegung zum Einsetzen der Übertragungsuntereinheit (4) in die Aufnahme über den Rahmen (48, 49) übersteht, zu bilden.

8. Linearaktor nach Anspruch 6 oder 7, **dadurch gekennzeichnet, dass** der Rahmen (48, 49) der Übertragungsuntereinheit (4) einen oder mehrere Vorsprünge (481) umfasst, die nach außen überstehen und bemessen sind, um sich an einer Aufnahmewand (22, 24) von wenigstens einem der ersten (21) und zweiten (23) Gehäuse abzustützen.

9. Linearaktor nach einem der Ansprüche 5 bis 8, **dadurch gekennzeichnet, dass** die Übertragungsuntereinheit (4) sich durch eine Öffnung (100) einer Tragplatte (10), an welcher der Aktor (2) fest angebracht ist, erstreckt, und dass der Antrieb (5) und das Schraube-Mutter-System im Wesentlichen parallele Achse aufweisen und in Bezug auf die Tragplatte gegenüber voneinander auf einer Seite angeordnet sind.

10. Linearaktor nach einem der Ansprüche 6 bis 8, **dadurch gekennzeichnet, dass** eines der ersten und zweiten Gehäuse (21, 23) im Wesentlichen dicht in eine Öffnung (100) einer Tragplatte (10) eingesteckt ist.

11. Trommelbremse (1) mit zwei Backen (12, 13), die an einer Platte (10) derart angebracht sind, dass sie sich voneinander entfernen können, um an einer Reibspur, die durch die Innenseite einer gegenüber der Platte drehbeweglichen Trommel getragen ist, in Anlage zu kommen, **dadurch gekennzeichnet, dass** sie einen Linearaktor (2) nach einem der vorhergehenden Ansprüche umfasst, der dazu eingerichtet ist, zwei erste Enden (122, 132) der Backen, die einander gegenüberliegen, voneinander zu entfernen,
und dass die beiden Backen (12, 13) an einem Arm (14) angelenkt sind, der gegenüber der Platte beweglich ist und der sie in der Nähe ihrer zweiten Enden (121, 131), welche den ersten Enden gegenüberliegen, untereinander verbindet, wobei der Arm geeignet ist, von einer (12) der Backen auf die andere (13) der Backen eine Kraft zu übertragen, die die andere Backe (13) in Anlage an ein Verankerungselement (21), welches gegenüber der Platte (10) fest ist, drückt.

12. Bremse nach Anspruch 11, **dadurch gekennzeichnet, dass** sie ferner einen zweiten Aktor umfasst, der eine zweite Brems-, insbesondere Betriebsbremsfunktion (11) sicherstellt, wobei der zweite Aktor dazu eingerichtet ist, die zweiten Enden (121, 131) der beiden Backen (12, 13) voneinander zu entfernen, während die ersten Enden (122, 132) in Bezug auf die Platte (10) in Anschlag gelangen.

13. Bremsvorrichtung für ein Fahrzeug oder eine Untergruppe eines Fahrzeugs, insbesondere Straßenfahrzeugs, umfassend eine Bremsscheibe, die mit Bremsbelägen zusammenwirkt, um eine zweite Bremsfunktion, insbesondere Betriebsbremsfunktion zu erfüllen, **dadurch gekennzeichnet, dass** sie eine Bremse nach Anspruch 11 umfasst, die dazu eingerichtet ist, eine erste Bremsfunktion, insbesondere einer Hand- und/oder Notbremse sicherzustellen, und dass ihre Trommel mit der Bremsscheibe fest verbunden und koaxial zu dieser ist.

14. Verfahren zur Montage eines Linearaktors (2) nach einem der Ansprüche 1 bis 10, **dadurch gekennzeichnet, dass** es wenigstens einen Schritt zur Montage einer Übertragungsuntereinheit (4) umfasst, die mehrere Zahnräder (42, 42, 43) aufweist, welche miteinander in Eingriff und innerhalb eines Rahmens (48, 49) gehalten sind, so dass sie einen Getriebeeinsatz bilden,
und dass es ferner einen Schritt zum Einsetzen der Übertragungsuntereinheit (4) in ein erstes Gehäuse (21) umfasst, wobei das erste Gehäuse anschließend mit einem zweiten Gehäuse (23) zusammengefügt wird, um die Übertragungsuntereinheit einzuschließen, wobei das eine (21) der Gehäuse dann an der Tragplatte (10) befestigt wird, um zwischen der Platte und einem (21) der Gehäuse eine oder mehrere Befestigungslaschen (232), welche von dem anderen (23) der Gehäuse vorstehen, einzuklemmen.

15. Verfahren nach dem vorhergehenden Anspruch, **dadurch gekennzeichnet, dass** nach dem Einfügen der Übertragungsuntereinheit (4) in das erste Gehäuse (21) wenigstens ein Teil der Linearbetätigungsanordnung (3) in eine mittlere Öffnung (430) des getriebenen Zahnrades (43) der Übertragungsuntereinheit axial eingesetzt wird.

## Claims

1. Linear actuator (2) for a drum brake (1) of a vehicle, in particular a motor vehicle, **characterized in that** it comprises:
- a linear actuator assembly (3) including a screw-and-nut system formed by a rotating threaded element (31) and a second threaded element (32), arranged in order to selectively apply brake shoes (12, 13) against the drum of said brake by moving first ends (122, 132) of said shoes apart from each other by driving said rotating threaded element in rotation relative to said second threaded element;
- a rotary drive (5);
- a transmission sub-assembly (4) comprising gear wheels (41, 42, 43) with parallel axes, meshed together and mounted in order to transmit the rotational movement of said drive to said rotating threaded element, and **in that** the rotating threaded element (31) is mounted so that it is firmly fixed in rotation to and sliding coaxially with a driven gear wheel (43) situated at the output of the transmission sub-assembly (4).

2. Linear actuator according to the preceding claim, **characterized in that** the gear wheels (41, 42, 43) are external gear wheels.

3. Linear actuator according to any one of the preceding claims, **characterized in that** the transmission ratio between a driving gear wheel (41) situated at the input of the transmission sub-assembly (4) and a driven gear wheel (43) situated at the output of said transmission sub-assembly produces a reduction in angular velocity of a factor greater than 2, for example between 2.5 and 3.5, and in particular equal to 2.9.

4. Linear actuator according to any one of the preceding claims, **characterized in that** a driving gear wheel (41), situated at the input of the transmission sub-assembly (4), is coupled in rotation by nesting with the drive (5).

5. Linear actuator according to any one of the preceding claims, **characterized in that** the transmission sub-assembly (4) forms a preassembled element inside a casing (48, 49) that supports the gear wheels (41, 42, 43),
**in that** the casing comprises two parallel plates (48, 49) held together by connecting parts forming spacers (471, 472, 473), and between which the gear wheels (41, 42, 43) are held.

6. Linear actuator according to the preceding claim, **characterized in that** it comprises:
- a first housing (21), receiving the linear actuator assembly (3) in an actuator recess (217), which intersects a recess (22) receiving a driven gear wheel situated at the output of the transmission sub-assembly (4);
- a second housing (23), which is assembled with said first housing so as to enclose said transmission sub-assembly, and which is provided with a recess (24) receiving a driving gear wheel (41) situated at the input to said transmission sub-assembly (4).

7. Linear actuator according to claim 6, **characterized in that** at least one recess wall (22, 24) of at least one of the first (21) and second (23) housings comprises one or more grooves (221) arranged in order to form a guide for the translation of at least one spacer (471, 472) or gear wheel (42) shaft (473) head extending beyond the casing (48, 49) during a movement to insert the transmission sub-assembly (4) into said recess.

8. Linear actuator according to any one of claims 6 or 7, **characterized in that** the casing (48, 49) of the transmission sub-assembly (4) comprises one or more protrusions (481) extending outwards and dimensioned to rest on a recess wall (22, 24) of at least one of the first (21) and second (23) housings.

9. Linear actuator according to any one of claims 5 to 8, **characterized in that** the transmission sub-assembly (4) extends through an opening (100) in a backing plate (10) on which the actuator (2) is rigidly mounted, and **in that** the drive (5) and the screw-and-nut system have substantially parallel axes and are arranged on opposite sides of said backing plate from each other.

10. Linear actuator according to any one of claims 6 to 8, **characterized in that** one of the first and second housings (21, 23) is engaged in a substantially sealed manner in an opening (100) in a backing plate (10).

11. Drum brake (1) comprising two shoes (12, 13) mounted on a backing plate (10) so as to be able to be moved apart from each other to press on a braking surface borne by the inside of a drum mobile in rotation relative to said backing plate, **characterized in that** it comprises a linear actuator (2) according to any one of the preceding claims, arranged in order to push apart two first ends (122, 132) of said shoes, which are facing each other,
and **in that** the two shoes (12, 13) are hinged on a rod (14) that is mobile relative to the backing plate and connects them to each other in the vicinity of the second ends thereof (121, 131), opposite the first ends, said rod being capable of transmitting from one shoe (12) to the other (13) a force that pushes said other shoe (13) against an anchor (21) that is fixed relative to the backing plate (10).

12. Brake according to claim 11, **characterized in that** it also comprises a second actuator carrying out a second braking function, in particular service braking (11), said second actuator being arranged in order to move the second ends (121, 131) of the two shoes (12, 13) apart from each other while the first ends (122, 132) abut against the backing plate (10).

13. Braking device for a vehicle or vehicle sub-assembly, in particular a road vehicle, comprising a brake disc interacting with brake pads to carry out a second braking function, in particular service braking, **characterized in that** it comprises a brake according to claim 11, arranged in order to carry out a first braking function, in particular parking and/or emergency braking, and **in that** the drum thereof is firmly fixed to and coaxial with said brake disc.

14. Method for assembling a linear actuator (2) according to any one of claims 1 to 10, **characterized in that** it comprises at least a step of assembling a transmission sub-assembly (4) comprising a plurality of gear wheels (41, 42, 43) meshed together and held inside a casing (48, 49) so as to form a gear cartridge,
and **in that** it also comprises a step of inserting the transmission sub-assembly (4) into a first housing (21), said first housing then being assembled with a second housing (23) so as to enclose said transmission sub-assembly, one (21) of said housings then being fastened to the backing plate (10) so as to clamp one or more fastening lugs (232) extending from one of the housings (23) between said backing plate and the other housing (21).

15. Method according to the preceding claim, **characterized in that**, after insertion of the transmission sub-assembly (4) into the first housing (21), at least part of the linear actuator assembly (3) is inserted axially into a central orifice (430) of the driven gear wheel (43) of said transmission sub-assembly.
